(19) Europäisches Patentamt / European Patent Office / Office européen des brevets

(11) **EP 3 227 646 B1**

(12) **FASCICULE DE BREVET EUROPEEN**

(45) Date de publication et mention
de la délivrance du brevet:
**19.09.2018 Bulletin 2018/38**

(51) Int Cl.:
***G01D 21/00*** *(2006.01)* ***G06Q 10/06*** *(2012.01)*
***G06Q 50/04*** *(2012.01)*

(21) Numéro de dépôt: **15820562.5**

(22) Date de dépôt: **04.12.2015**

(86) Numéro de dépôt international:
**PCT/FR2015/053323**

(87) Numéro de publication internationale:
**WO 2016/087796 (09.06.2016 Gazette 2016/23)**

(54) **PROCÉDÉ DE FABRICATION DE PIÈCES BASÉ SUR L'ANALYSE D'INDICATEURS STATISTIQUES PONDÉRÉS**

VERFAHREN ZUR HERSTELLUNG VON TEILEN AUF DER BASIS DER ANALYSE VON STATISTISCHEN GEWICHTETEN INDIKATOREN

METHOD OF MANUFACTURING PARTS, BASED ON THE ANALYSIS OF WEIGHTED STATISTICAL INDICATORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2014 FR 1461991**

(43) Date de publication de la demande:
**11.10.2017 Bulletin 2017/41**

(73) Titulaire: **SAFRAN AIRCRAFT ENGINES**
**75015 Paris (FR)**

(72) Inventeurs:
• **FERRY, Olivier**
**77550 Moissy-Cramayel (FR)**
• **CAMBEFORT, Arnaud**
**77550 Moissy-cramayel (FR)**
• **COURTIN, Pascal**
**77550 Moissy-cramayel (FR)**
• **HARDOUIN, Nicolas**
**77550 Moissy-cramayel (FR)**
• **CLERET DE LANGAVANT, Charles**
**77550 Moissy-cramayel (FR)**

(74) Mandataire: **Regimbeau**
**20, rue de Chazelles**
**75847 Paris Cedex 17 (FR)**

(56) Documents cités:
**US-A- 5 655 110**

EP 3 227 646 B1

**Description**

DOMAINE DE L'INVENTION

L'invention porte sur l'utilisation d'indicateurs statistiques en milieu industriel, par exemple dans l'industrie aéronautique, en particulier pour faciliter le suivi et le contrôle de la fabrication de pièces.

ETAT DE LA TECHNIQUE

La fabrication de pièces, notamment mécaniques, en milieu industriel se heurte à deux contraintes opposées, à savoir l'augmentation des cadences et volumes de fabrication d'une part, et l'augmentation des niveaux de qualité requis d'autre part, ce qui est en particulier vrai dans le domaine aéronautique.

Il est aujourd'hui difficilement envisageable d'effectuer des contrôles qualité pour la totalité des pièces fabriquées sauf à nuire considérablement à la cadence de fabrication. On utilise donc en général des indicateurs statistiques de la fabrication, permettant de déduire de manière fiable une information globale sur la qualité de l'ensemble des pièces fabriquées à partir d'information spécifiques de la qualité d'un nombre fini de pièces prélevées en tant qu'échantillon.

Outre les contrôles en fin de production qui peuvent être faits sur des échantillons ayant un nombre limité de pièces, il est généralement également effectué des contrôles en cours de production de manière à pouvoir éventuellement piloter le flux de production, c'est-à-dire ajuster les conditions de fabrication pour s'assurer que les pièces fabriquées continuent de répondre aux critères de qualités requis. Dans certains cas, ces contrôles statistiques en cours de production peuvent amener à stopper complètement la production, notamment si les pièces produites présentes des défauts de qualité trop importants et que le flux de fabrication doit être réinitialisé entièrement.

Les contrôles qualité sont faits en relation à une dimension caractéristique des pièces qui sont fabriquées. Cette dimension caractéristique peut être par exemple une cote particulière de la pièce, sa masse, ou toute autre caractéristique mesurable desdites pièces.

Pour effectuer les contrôles statistiques, on prélève successivement plusieurs échantillons, chaque échantillon comprenant plusieurs pièces du flux de fabrication, et on mesure ensuite la dimension caractéristique de chaque pièce de l'échantillon prélevé. A partir des différentes mesures de la dimension caractéristique des pièces de l'échantillon prélevé, on calcule la valeur d'un indicateur statistique préalablement choisi pour suivre la qualité du flux de fabrication.

Il existe divers indicateurs statistiques pouvant être utilisés afin de suivre l'évolution d'un flux de fabrication de pièces, chaque indicateur statistique donnant des informations différentes permettant d'ajuster les conditions de fabrication d'une manière ou d'une autre.

La plupart des indicateurs statistiques utilisés pour le suivi d'un processus industriel de fabrication sont calculés à partir d'une moyenne $\mu$ et d'un écart-type $\sigma$ de la dimension caractéristique mesurée sur plusieurs pièces. Plus précisément, $\mu$ correspond à la moyenne du décentrage mesuré pour la dimension caractéristique par rapport à la valeur de référence pour cette dimension caractéristique.

Le brevet US5655110 donne un exemple d'un tel processus industriel de fabrication. On peut par exemple citer le coefficient de centrage, noté Cc, qui représente un bridage imposé aux variations de la moyenne $\mu$ à l'intérieur de l'intervalle de tolérance IT. L'intervalle de tolérance IT est l'écart entre les valeurs extrêmes admissibles de la dimension caractéristique, étant donc calculé comme la différence entre la tolérance supérieure TS et la tolérance inférieure TI de la dimension caractéristique mesurée, soit IT = TS - TI. Le coefficient de centrage Cc est généralement défini par la formule :

$$Cc = \frac{\mu}{(TS - TI)/2}$$

Le processus de fabrication peut aussi être piloté en étudiant des indices de capabilité qui caractérisent la performance réelle du procédé par rapport à la performance souhaitée. De tels indices permettent en effet de mesurer la capacité du processus de fabrication à réaliser des pièces dont les dimensions caractéristiques sont comprises dans l'intervalle de tolérance IT souhaité.

On peut par exemple se référer à l'indice de capabilité procédé Cp qui représente l'aptitude d'un procédé de fabrication de produire des pièces de manière précise et répétable. Plus l'indice de capabilité Cp est grand et plus les pièces fabriquées vont se ressembler, tandis que si l'indice de capabilité Cp est faible, la production sera dispersée. L'indice de capabilité procédé Cp est défini généralement par la formule :

$$Cp = \frac{(TS - TI)/2}{3\sigma}$$

L'inconvénient d'un tel indice de capabilité procédé Cp est qu'un résultat positif (c'est-à-dire élevé) peut aussi correspondre à une production en dehors des limites de la tolérance. En effet, la conformité industrielle d'un flux de fabrication dépend de l'étendue, c'est-à-dire non seulement de sa dispersion mais aussi de la position de sa moyenne par rapport à l'intervalle de tolérance IT. Un autre indice de capabilité utilisé est donc l'indice de capabilité Cpk qui représente la dispersion mais également le centrage de la production par rapport aux limites de la tolérance. Dans ce cas, lorsque l'indice de capabilité Cpk est élevé, cela signifie que la production est répétable et qu'elle est en outre bien centrée dans l'intervalle de tolérance IT, c'est-à-dire qu'il y aura moins de risque que des pièces soient fabriquées en dehors des tolérances. L'indice de capabilité procédé Cpk est défini généralement par la formule :

$$Cpk = \frac{Min(TS - \mu\,;\mu - TI)}{3\sigma}$$

Il existe bien entendu d'autres indicateurs statistiques ayant des propriétés spécifiques, et pouvant être utilisés en fonction des besoins de pilotage du processus de fabrication.

Pour fiabiliser le suivi et le pilotage du processus de fabrication en utilisant de tels indicateurs statistiques, on surveille en général ces indicateurs sur deux échelles de temps.

En effet, on peut se baser sur une échelle longue de temps définie avec un nombre de pièces minimum (en général au moins 250 pièces par échantillonnage), sur laquelle il est possible de calculer des indicateurs statistiques tel que le Cpk avec un intervalle de confiance suffisamment bon pour leur accorder une certaine crédibilité.

On peut également se baser sur une échelle courte de temps qui se définit quant à elle par rapport à un intervalle de temps au bout duquel on effectue un prélèvement (généralement chaque semaine), ce qui permet la mise en oeuvre d'une réaction plus prompte en cas de rapide dérive de la production.

Ces méthodes de suivi de la production ne sont toutefois pas satisfaisantes lorsque le flux de fabrication de pièces n'est pas assez important, c'est-à-dire lorsque le nombre de pièces de l'échantillon prélevé est trop petit et/ou très différent entre deux prélèvements successifs.

Par exemple, la production d'aubes de turbines est souvent très variables, où les tailles d'échantillons peuvent être extrêmement différentes d'une semaine sur l'autre (de 8 à 300 pièces par période).

Un but de la présente invention est de proposer un procédé de fabrication de pièces basé sur l'analyse d'au moins un indicateur statistique performant pour le suivi des productions très aléatoires, avec un nombre de pièces à échantillonner variables, et/ou avec des nombres de pièces faibles.

Encore un but de la présente invention est de proposer un procédé de fabrication de pièces basé sur l'analyse d'au moins un indicateur statistique qui est réactif aux variations importantes du flux de fabrication, tout en étant suffisamment stabilisé pour ne pas réagir au moindre écart non significatif de production, permettant ainsi également une vision globale du flux de fabrication.

EXPOSE DE L'INVENTION

A cette fin, on propose un procédé de fabrication de pièces basé sur l'analyse d'au moins un indicateur statistique représentatif d'une dimension caractéristique des pièces, selon lequel :

a) On prélève au cours du temps plusieurs échantillons, chaque échantillon comprenant plusieurs pièces fabriquées par un dispositif de fabrication ;
b) On mesure la dimension caractéristique de chaque pièce de l'échantillon prélevé ;
c) On calcule pour chaque échantillon prélevé une moyenne pondérée et un écart-type pondéré de la dimension caractéristique selon une pondération exponentielle à partir

◦ d'une moyenne et d'un écart-type des dimensions caractéristiques mesurées sur les pièces dudit échantillon prélevé,
◦ de moyennes pondérées et d'écarts-type pondérés de la dimension caractéristique calculés pour des échantillons prélevés précédemment ;

d) On calcule pour chaque échantillon prélevé une valeur de l'indicateur statistique à partir de la moyenne pondérée et de l'écart type pondéré ainsi calculés ;

e) On compare la valeur de l'indicateur statistique ainsi calculée pour l'échantillon prélevé à une valeur de référence, ce qui permet par exemple de détecter un écart éventuel entre la valeur de l'indicateur statistique et la valeur de référence ;

f) On pilote la fabrication des pièces en fonction des résultats de la comparaison, de préférence en ajustant des paramètres de réglage du dispositif de fabrication utilisé pour fabriquer les pièces afin d'optimiser un écart entre la valeur de l'indicateur statistique et la valeur de référence.

Chacune des étapes présentées est automatisée.

L'étape de mesure de la dimension caractéristique peut être faite avec un dispositif de mesure, comprenant par exemple des capteurs permettant de réaliser une mesure automatisée de dimensions spécifiques de la pièce.

Les étapes de calcul peuvent être faites par tout dispositif de calcul approprié, tel que par exemple des moyens de traitement de données informatiques, tel qu'un ordinateur.

L'étape de pilotage peut par exemple être réalisée par un dispositif de pilotage intégrant des moyens de traitement pour intégrer et traiter les données issues des étapes de calcul, afin de corriger tout écart détecté dans la production et corriger le flux de production. En particulier, le dispositif de pilotage est prévu pour corriger les paramètres d'entrée du dispositif de production dont sont issues les pièces.

Le dispositif de pilotage vient donc de préférence ajuster les paramètres de réglage du dispositif de fabrication utilisé pour fabriquer les pièces afin par exemple de réduire l'écart entre la valeur de l'indicateur statistique et la valeur de référence.

De manière plus générale, on cherche à optimiser l'écart entre la valeur de l'indicateur statistique et la valeur de référence pour que la production des pièces soit conforme aux exigences du cahier des charges associé. On modifie les paramètres de production pour modifier, resp. corriger, l'écart identifié entre la valeur de l'indicateur statistique et la valeur de référence. En fonction de l'indicateur statistique utilisé, optimiser l'écart pourra par exemple consister à réduire l'écart identifié.

Des aspects préférés mais non limitatifs de ce procédé, pris seuls ou en combinaison, sont les suivants :

- le nombre de pièces contenues dans chaque échantillon prélevé n'est pas constant, et où afin de calculer pour chaque échantillon prélevé à une période t+1 une moyenne pondérée et un écart-type pondéré de la dimension caractéristique, on définit un nombre de pièces agrégés $N_{t+1}$ selon la formule :

$$N_{t+1} = \lambda\, n_{t+1} + (1 - \lambda)\, N_t$$

où :

  ◦ $n_{t+1}$ est le nombre de pièces contenues dans l'échantillon prélevé à la période t+1 ;
  ◦ $N_t$ est le nombre de pièces agrégés de l'échantillon à la période t ;
  ◦ $\lambda$ est un coefficient de pondération compris entre 0 et 1.

- le nombre de pièces contenues dans chaque échantillon prélevé n'est pas constant, et où afin de calculer pour chaque échantillon prélevé à une période t+1 une moyenne pondérée et un écart-type pondéré de la dimension caractéristique, on définit un nombre de pièces agrégés $N_{t+1}$ selon la formule :

$$N_{t+1} = k\, \lambda\, n_{t+1} + (1 - \lambda)\, N_t$$

où :

  ◦ $n_{t+1}$ est le nombre de pièces contenues dans l'échantillon prélevé à la période t+1 ;
  ◦ $N_t$ est le nombre de pièces agrégés de l'échantillon à la période t ;
  ◦ $\lambda$ est un coefficient de pondération compris entre 0 et 1 ;
  ◦ k est un coefficient d'agrégation déterminé strictement supérieur à 1.

- on calcule pour chaque échantillon prélevé à une période t+1 une moyenne pondérée $M_{t+1}$ et un écart-type pondéré $S_{t+1}$ de la dimension caractéristique selon les formules :

$$M_{t+1} = \lambda\,\mu_{t+1} + (1-\lambda)M_t$$

$$S_{t+1} = \sqrt{\lambda\,\sigma_{t+1}^2 + (1-\lambda)S_t^2 + \lambda\,(1-\lambda)(\mu_{t+1} - M_t)^2}$$

où :

      ◦ $\mu_{t+1}$ est la moyenne des dimensions caractéristiques mesurées sur les pièces de l'échantillon prélevé à la période t+1 ;
      ◦ $M_t$ est la moyenne pondérée de la dimension caractéristique calculée pour la période t ;
      ◦ $\sigma_{t+1}$ est l'écart-type des dimensions caractéristiques mesurées sur les pièces de l'échantillon prélevé à la période t+1 ;
      ◦ $S_t$ est l'écart-type pondéré de la dimension caractéristique calculé pour la période t ;
      ◦ $\lambda$ est un coefficient de pondération compris entre 0 et 1.

- on calcule pour chaque échantillon prélevé à une période t+1 une moyenne pondérée $M_{t+1}$ et un écart-type pondéré $S_{t+1}$ de la dimension caractéristique selon les formules :

$$M_{t+1} = \lambda^*\,\mu_{t+1} + (1-\lambda^*)M_t$$

$$S_{t+1} = \sqrt{\lambda^*\,\sigma_{t+1}^2 + (1-\lambda^*)S_t^2 + \lambda^*(1-\lambda^*)(\mu_{t+1} - M_t)^2}$$

où :

      ◦ $\mu_{t+1}$ est la moyenne des dimensions caractéristiques mesurées sur les pièces de l'échantillon prélevé à la période t+1 ;
      ◦ $M_t$ est la moyenne pondérée de la dimension caractéristique calculée pour la période t ;
      ◦ $\sigma_{t+1}$ est l'écart-type des dimensions caractéristiques mesurées sur les pièces de l'échantillon prélevé à la période t+1 ;
      ◦ $S_t$ est l'écart-type pondéré de la dimension caractéristique calculé pour la période t ;
      ◦ $\lambda$ est un coefficient de pondération compris entre 0 et 1 ;
      ◦ $\lambda^*$ est un coefficient de pondération intermédiaire défini par la formule :

$$\lambda^* = \frac{k\,\lambda\,n_{t+1}}{k\,\lambda\,n_{t+1} + (1-\lambda)\,N_t}$$

- le au moins un indicateur statistique est un indice de capabilité et/ou un coefficient de centrage.
- on choisit comme indicateur statistique un indice de capabilité Cpk calculé selon la formule :

$$Cpk = \frac{Min(TS - M_{t+1}\,;M_{t+1} - TI)}{3S_{t+1}}$$

où :

      ◦ $M_{t+1}$ est la moyenne pondérée et $S_{t+1}$ l'écart-type pondéré de la dimension caractéristique d'un échantillon à une période t+1 ;
      ◦ TS est une tolérance supérieure de la dimension caractéristique mesurée ;
      ◦ TI est une tolérance inférieure de la dimension caractéristique mesurée.

- on choisit comme indicateur statistique un indice de capabilité Cp calculé selon la formule :

$$Cp = \frac{(TS - TI)/2}{3S_{t+1}}$$

où :

◦ $S_{t+1}$ est l'écart-type pondéré de la dimension caractéristique d'un échantillon à une période t+1 ;
◦ TS est une tolérance supérieure de la dimension caractéristique mesurée ;
◦ TI est une tolérance inférieure de la dimension caractéristique mesurée.

- on choisit comme indicateur statistique un coefficient de centrage Cc calculé selon la formule :

$$Cc = \frac{M_{t+1}}{(TS - TI)/2}$$

où :

◦ $M_{t+1}$ est la moyenne pondéré de la dimension caractéristique d'un échantillon à une période t+1 ;
◦ TS est une tolérance supérieure de la dimension caractéristique mesurée ;
◦ TI est une tolérance inférieure de la dimension caractéristique mesurée.

DESCRIPTION DES FIGURES

D'autres caractéristiques et avantages de l'invention ressortiront encore de la description qui suit, laquelle est purement illustrative et non limitative et doit être lue en regard des figures annexées :

- La figure 1est un graphique illustrant l'évolution de l'indice de capabilité Cpk au cours du temps pour plusieurs types d'échantillonnage.
- La figure 2 est un schéma illustrant une chaine de production intégrant un contrôle et pilotage de la production avec échantillonnage de pièces.

DESCRIPTION DETAILLEE DE L'INVENTION

Pour répondre aux contraintes de variabilité de la production, qui se répercute non seulement sur la moyenne de la dimension caractéristique mesurée lors des échantillonnages, mais également sur l'écart-type de ces mesures, il est proposé de calculer pour chaque échantillon prélevé une moyenne pondérée et un écart-type pondéré de la dimension caractéristique selon une pondération exponentielle.

Préférentiellement, ce calcul est basé sur la moyenne et l'écart-type des dimensions caractéristiques mesurées sur les pièces de l'échantillon prélevé, ainsi que sur les moyennes pondérées et les écarts-type pondérés de la dimension caractéristique qui ont été calculés pour des échantillons prélevés précédemment.

Pour la pondération de la moyenne par exemple, l'indice suivi est une moyenne pondérée du décentrage de la production que nous noterons $M_t$, et qui est calculée à la période t + 1 de la façon suivante, en fonction des données de décentrage de la période $t$ + 1 notées $\mu_{t+1}$, et de l'indice $M_t$ calculé à la période $t$ :

$$M_{t+1} = \lambda\,\mu_{t+1} + (1 - \lambda)M_t$$

où $\lambda \in [0; 1]$ est un coefficient de pondération choisi au préalable.

Cela correspond au mélange de deux populations de moyennes $\mu_{t+1}$ et $M_t$ dans des proportions respectives $\lambda$ et $(1 - \lambda)$.

La pondération est dite exponentielle car en développant la formule ci-dessus, on obtient :

$$M_{t+1} = \lambda\,\mu_{t+1} + \lambda(1 - \lambda)\mu_t + \lambda(1 - \lambda)^2\mu_{t-1} + \lambda(1 - \lambda)^3\mu_{t-2} + \lambda(1 - \lambda)^4\mu_{t-3} + \cdots$$

Dans toute la description, une valeur correspondant à une caractéristique spécifiquement liée à l'échantillon prélevé à la période t est notée par une lettre minuscule qualifiant ladite caractéristique suivie de l'indice t. Au contraire, une valeur d'une caractéristique qui n'est pas spécifiquement liée à l'échantillon prélevé à la période t mais plutôt à tous les échantillons prélevés entre les périodes 0 et t est notée par une lettre majuscule qualifiant ladite caractéristique suivie de l'indice t.

Ainsi, $\mu_t$ représente la moyenne du décentrage relevé sur les pièces de l'échantillon prélevé à la période t, tandis que $M_t$ représente la moyenne du décentrage pondérée et calculée à partir de tous les échantillons prélevés entre les périodes 0 et t.

De la même manière que pour la moyenne, on peut construire un indicateur $S_t$ de l'écart-type d'une population où on donne un poids plus importants aux derniers échantillons prélevés, et calculé comme l'écart-type du mélange de deux populations d'écarts-types respectifs $\sigma_{t+1}$ (données de la période $t + 1$) et $S_t$ (indice de la période $t$) dans des proportions respectives $\lambda$ et $(1 - \lambda)$, de la façon suivante :

$$S_{t+1} = \sqrt{\lambda\, \sigma_{t+1}^2 + (1 - \lambda)S_t^2 + \lambda(1 - \lambda)(\mu_{t+1} - M_t)^2}$$

En réalité, il est préférable de tenir également compte des variations de la taille des échantillons.

On peut ainsi définir un nombre de pièces agrégé à la période $t$, noté $N_t$, et qui se calcule récursivement en fonction de la taille $n_{t+1}$ de l'échantillon au temps $t + 1$.

Une formule d'agrégation possible est la suivante :

$$N_{t+1} = \lambda\, n_{t+1} + (1 - \lambda)\, N_t$$

Cette formule d'agrégation du nombre de pièces donne une moyenne sans cumul : la somme des coefficients affectés aux différents échantillons vaut 1.

Intéressons-nous à une simple somme de taille de prélèvements sur un nombre de semaines $k$ donné ($k = 5$ par exemple dans le cas où l'échantillon considéré cumule les mesures des cinq derniers prélèvements), la somme des pondérations affectées aux échantillons vaudrait alors k (et ceci bien entendu sans que cela rien ne change rien au calcul des moyennes et des écarts-types corrigés).

L'enjeu de cette somme des pondérations réside dans le calcul des intervalles de confiance pour les indices de capabilité Cpk : si l'on calcule la taille corrigée de l'échantillon en utilisant la formule $N_{t+1} = \lambda n_{t+1} + (1 - \lambda)\, N_t$ avec des tailles de prélèvements égales à 10 sur 30 échantillons consécutifs, la taille corrigée de l'échantillon vaudra toujours 10, et l'intervalle de confiance sur les indices de capabilité Cpk calculés serait énorme, tandis que si l'on s'intéressait à la taille cumulée des cinq derniers prélèvements ($N_{t+1} = n_{t+1} + n_t + n_{t-1} + n_{t-2} + n_{t-3}$), la taille cumulée de l'échantillon serait en permanence égale à 50, et l'intervalle de confiance sur les indices de capabilité Cpk serait bien meilleur.

Ainsi, pour encore améliorer le suivi et le pilotage du flux de fabrication, on utilisera pour le calcul de la taille corrigée de l'échantillon une formule partiellement cumulative, de la forme :

$$N_{t+1} = k\, \lambda\, n_{t+1} + (1 - \lambda)\, N_t$$

où k > 1, et $\lambda \in [0;1]$ sont fixés au début du processus de fabrication par l'utilisateur en fonction de ses exigence en termes de réactivité et de cumul de prélèvements.

Si l'on effectuait un simple mélange de deux échantillons en tenant compte de leurs tailles respectives $n_1$ et $n_2$, on calculerait la moyenne et l'écart-type du mélange par les formules :

$$\mu = \gamma\, \mu_1 + (1 - \gamma)\mu_2$$

et

$$\sigma = \sqrt{\gamma\, \sigma_1^2 + (1 - \gamma)\sigma_2^2 + \gamma(1 - \gamma)(\mu_1 - \mu_2)^2}$$

avec $\gamma = \dfrac{n_1}{n_1+n_2}$.

Or la population « virtuelle » de taille $N_{t+1} = k\lambda n_{t+1} + (1 - \lambda)N_t$ est exactement de la même façon une population agglomérée, constituée par le mélange de deux sous-populations de tailles respectives $k\lambda n_{t+1}$ et $(1 - \lambda)N_t$.

On peut donc définir la proportion des pièces récemment contrôlées dans le mélange, que l'on notera $\lambda^*$, selon la formule:

$$\lambda^* = \frac{k\,\lambda\,n_{t+1}}{k\,\lambda\,n_{t+1} + (1-\lambda)\,N_t}$$

Selon un autre mode de réalisation, on peut alors calculer la moyenne pondérée $M_{t+1}$ et l'écart-type pondéré $S_{t+1}$ par les formules :

$$M_{t+1} = \lambda^*\,\mu_{t+1} + (1-\lambda^*)M_t$$

et

$$S_{t+1} = \sqrt{\lambda^*\,\sigma_{t+1}^2 + (1-\lambda^*)S_t^2 + \lambda^*(1-\lambda^*)(\mu_{t+1} - M_t)^2}$$

Le suivi et le pilotage du flux de fabrications des pièces est ensuite effectué en utilisant les indicateurs statistiques habituels qui se basent sur une moyenne et un écart-type de la dimension caractéristique mesuré sur les pièces de l'échantillon, en substituant la moyenne pondérée $M_{t+1}$ à la moyenne $\mu$, et l'écart-type pondéré $S_{t+1}$ à l'écart-type $\sigma$ dans les formules qui définissent ces indicateurs statistiques.

Ainsi par exemple, l'indice de capabilité Cpk sera calculé selon la formule :

$$Cpk = \frac{Min(TS - M_{t+1}\,;\,M_{t+1} - TI)}{3S_{t+1}}$$

L'indice de capabilité Cp sera calculé selon la formule :

$$Cp = \frac{(TS - TI)/2}{3S_{t+1}}$$

Le coefficient de centrage Cc sera calculé selon la formule :

$$Cc = \frac{M_{t+1}}{(TS - TI)/2}$$

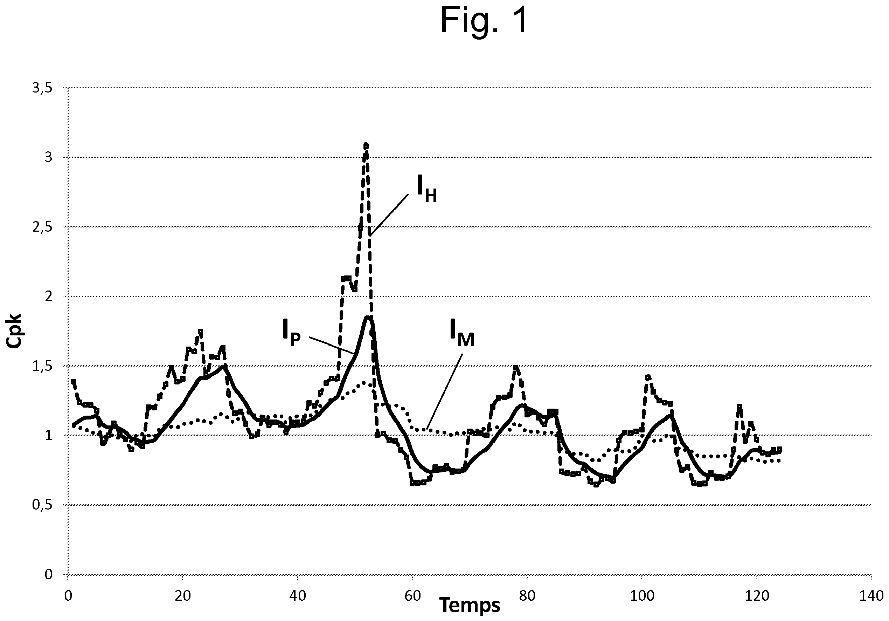

L'exemple décrit ci-dessous au regard de la figure 1 illustre les avantages considérables apportés par les indicateurs pondérés calculés à partir des valeurs $M_{t+1}$ et $S_{t+1}$ sur la base de tirages aléatoires.

Le graphe de la figure 1 illustre :

- à la courbe I$_H$, l'évolution d'un premier indicateur correspondant aux indices de capabilité Cpk calculés sur un échantillon glissant de 10 pièces, illustrant une échelle courte de temps selon les critères de l'art antérieur (représentant par exemple une semaine de production) ;
- à la courbe I$_M$, l'évolution d'un deuxième indicateur correspondant aux indices de capabilité Cpk calculés sur un échantillon glissant de 40 pièces, illustrant une échelle longue de temps selon les critères de l'art antérieur ;
- à la courbe I$_P$, l'évolution d'un troisième indicateur, dit indicateur pondéré, correspondant aux indices de capabilité Cpk calculés selon les valeurs de moyenne et d'écart-type pondérés, calculés en choisissant des paramètres $\lambda$ = 0.25 et $k$ = 4, ce qui assure qu'en régime permanent, avec des prélèvements hebdomadaires de 10 pièces, l'échantillon agrégé aura une taille $N_t$ constante égale à 40 pièces.

On constate sur ce graphique que l'indicateur illustré par la courbe $I_H$ est réactif, mais les intervalles de confiance sur des échantillons de dix pièces étant très grand, il ne permet pas de caractériser la population produite de manière satisfaisante. Sa volatilité permet par ailleurs difficilement de dégager des tendances dans le suivi de production. En effet, il a tendance à afficher des variations d'échantillonnage (bruit ou oscillations) qui troublent la lisibilité de son évolution, ou bien à être jubilatoire en période de hausse ou trop pessimiste en période de baisse.

L'indicateur illustré par la courbe $I_M$ cumule les données de quatre semaines, ce qui lui permet d'afficher une taille d'échantillon de 40 pièces, considérée comme suffisante dans cet exemple pour caractériser la production de manière satisfaisante. Néanmoins on observe qu'il possède une inertie qui le rend peu réactif aux variations rapides de la production.

L'indicateur pondéré illustré par la courbe $I_P$ affiche également une taille d'échantillon agrégé de 40 pièces, ce qui le rend suffisamment « volumineux » pour permettre au producteur de caractériser la production avec une confiance jugée satisfaisante. Pour autant cette taille importante ne s'accompagne pas d'une inertie aussi pénalisante que celle du deuxième indicateur illustré par la courbe $I_M$ face aux rapides dérives. Son examen permet de dégager simplement des tendances haussières ou baissières dans les cycles de production.

On voit donc que l'indicateur pondéré cumule les avantages des deux autres indicateurs préexistants, sans présenter aucun de leurs inconvénients.

Il simplifie la lecture des indicateurs et le pilotage de production et les fait gagner en pertinence, tout en caractérisant au mieux la population d'une période donnée.

Comme il ressort de la description qui précède, l'utilisation combinée d'une formule de calcul pondéré pour les moyennes et pour les écarts-types, tirée d'une analogie avec les formules de mélange de populations, permet de répondre au mieux aux besoins de suivi d'une production pour laquelle à la fois la moyenne mais aussi l'écart-type doivent être considérés comme variables.

L'introduction d'un coefficient de pondération intermédiaire noté $\lambda^*$ permet de tenir compte des tailles variables des échantillons prélevés. La valeur de ce coefficient de pondération intermédiaire reflète exactement le poids des pièces contrôlées au cours de la précédente période dans l'échantillon agrégé global.

Enfin, l'introduction d'un coefficient de cumul, noté k, permet de cumuler des échantillons mesurés, afin que la taille de l'échantillon agrégé soit supérieure à la taille moyenne des échantillons prélevés (de la même façon que lorsque le suivi s'opère sur cinq semaines glissantes, la taille de l'échantillon est égale à cinq fois la taille du prélèvement hebdomadaire).

Le procédé proposé peut être mis en oeuvre dans une chaîne de fabrication de pièces, pouvant être totalement ou partiellement automatisée, où des contrôles en cours de production permettent de piloter le flux de fabrication, c'est-à-dire ajuster les conditions de fabrication pour s'assurer que les pièces fabriquées continuent de répondre aux critères de qualités requis.

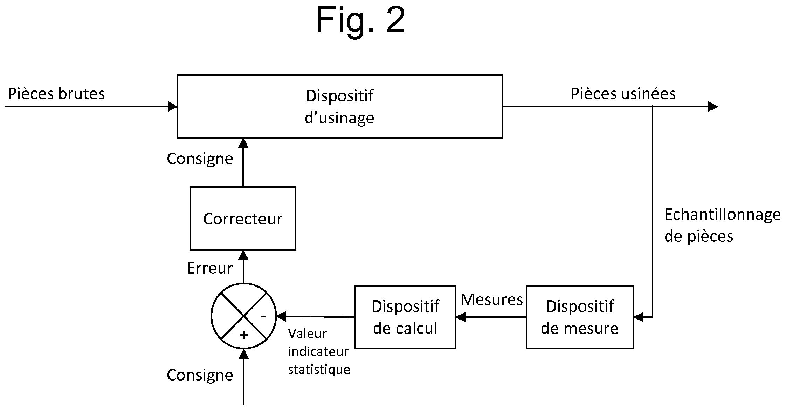

La figure 2 donne un exemple d'une telle chaine de fabrication dans laquelle un dispositif d'usinage, comme par exemple une machine 5 axes, est utilisé pour fabriquer des pièces selon une consigne spécifique. La consigne spécifique peut par exemple porter sur une dimension caractéristique particulière. A la place du dispositif d'usinage, il pourrait bien entendu être utilisé un dispositif de fabrication non limité à de l'usinage de pièces.

Dans cette chaine automatisée de production, des pièces sont prélevées en sortie du dispositif d'usinage afin de former un échantillon et transmise à un dispositif de mesure qui mesure une ou plusieurs dimensions caractéristiques de chaque pièce de l'échantillon prélevé. Un tel dispositif de mesure peut par exemple être une machine de mesure tridimensionnelle ayant des capteurs qui mesurent automatiquement les dimensions caractéristiques souhaitées de chacune des pièces.

Les données de mesures issues du dispositif de mesure sont ensuite transmises à un dispositif de calcul qui les traite pour calculer un ou plusieurs indicateurs statistiques représentatifs d'une des dimensions caractéristiques des pièces.

La valeur calculée de l'indicateur statistique est ensuite comparée à une consigne de référence sur la dimension caractéristique afin de piloter le flux de fabrication. Plus précisément, les résultats de cette comparaison permettent d'éventuellement ajuster les paramètres d'entrée du dispositif d'usinage.

Si un écart est constaté, impliquant une erreur, par exemple si la valeur de l'indicateur statistique sur la dimension caractéristique est en dehors d'une plage acceptable définie par la consigne de référence, des mesures correctrices sont déterminées par un correcteur afin d'ajuster les paramètres d'entrée du dispositif d'usinage. L'objectif des modifications des paramètres d'entrée du dispositif d'usinage est de corriger l'écart constaté, pour que la valeur de l'indicateur statistique sur la dimension caractéristique soit de nouveau dans une plage acceptable.

**Revendications**

1. Procédé de fabrication de pièces produites avec un dispositif de fabrication, basé sur l'analyse d'au moins un indicateur statistique représentatif d'une dimension caractéristique des pièces, comprenant les étapes automatisées suivantes consistant à :

   a) prélever au cours du temps plusieurs échantillons, chaque échantillon comprenant plusieurs pièces produites avec le dispositif de fabrication ;
   b) mesurer, avec un dispositif de mesure, la dimension caractéristique de chaque pièce de l'échantillon prélevé ;
   c) calculer, avec un dispositif de calcul, pour chaque échantillon prélevé une moyenne pondérée et un écart-type pondéré de la dimension caractéristique selon une pondération exponentielle à partir

   ◦ d'une moyenne et d'un écart-type des dimensions caractéristiques mesurées sur les pièces dudit échantillon prélevé,
   ◦ de moyennes pondérées et d'écarts-type pondérés de la dimension caractéristique calculés pour des échantillons prélevés précédemment ;

   d) calculer, avec le dispositif de calcul, pour chaque échantillon prélevé une valeur de l'indicateur statistique à partir de la moyenne pondérée et de l'écart type pondéré ainsi calculés ;
   e) comparer, avec un dispositif de pilotage, la valeur de l'indicateur statistique ainsi calculée pour l'échantillon prélevé à une valeur de référence pour détecter un écart éventuel entre la valeur de l'indicateur statistique et la valeur de référence ;
   f) piloter, avec le dispositif de pilotage, la fabrication des pièces en fonction des résultats de la comparaison en ajustant des paramètres de réglage du dispositif de fabrication pour optimiser l'écart entre la valeur de l'indicateur statistique et la valeur de référence.

2. Procédé selon la revendication 1, dans lequel le nombre de pièces contenues dans chaque échantillon prélevé n'est pas constant, et où afin de calculer pour chaque échantillon prélevé à une période t+1 une moyenne pondérée et un écart-type pondéré de la dimension caractéristique, on définit un nombre de pièces agrégés $N_{t+1}$ selon la formule :

$$N_{t+1} = \lambda \, n_{t+1} + (1 - \lambda) \, N_t$$

où :

   - $n_{t+1}$ est le nombre de pièces contenues dans l'échantillon prélevé à la période t+1 ;
   - $N_t$ est le nombre de pièces agrégés de l'échantillon à la période t ;
   - $\lambda$ est un coefficient de pondération compris entre 0 et 1.

3. Procédé selon la revendication 1, dans lequel le nombre de pièces contenues dans chaque échantillon prélevé n'est pas constant, et où afin de calculer pour chaque échantillon prélevé à une période t+1 une moyenne pondérée et un écart-type pondéré de la dimension caractéristique, on définit un nombre de pièces agrégés $N_{t+1}$ selon la formule :

$$N_{t+1} = k \, \lambda \, n_{t+1} + (1 - \lambda) \, N_t$$

où :

   - $n_{t+1}$ est le nombre de pièces contenues dans l'échantillon prélevé à la période t+1 ;
   - $N_t$ est le nombre de pièces agrégés de l'échantillon à la période t ;
   - $\lambda$ est un coefficient de pondération compris entre 0 et 1 ;
   - k est un coefficient d'agrégation déterminé strictement supérieur à 1.

4. Procédé selon l'une quelconque des revendications 1 à 3, dans lequel il est calculé pour chaque échantillon prélevé à une période t+1 une moyenne pondérée $M_{t+1}$ et un écart-type pondéré $S_{t+1}$ de la dimension caractéristique selon les formules :

$$M_{t+1} = \lambda\, \mu_{t+1} + (1-\lambda)M_t$$

$$S_{t+1} = \sqrt{\lambda\, \sigma_{t+1}^2 + (1-\lambda)S_t^2 + \lambda\,(1-\lambda)(\mu_{t+1} - M_t)^2}$$

où :

- $\mu_{t+1}$ est la moyenne des dimensions caractéristiques mesurées sur les pièces de l'échantillon prélevé à la période t+1 ;
- $M_t$ est la moyenne pondérée de la dimension caractéristique calculée pour la période t ;
- $\sigma_{t+1}$ est l'écart-type des dimensions caractéristiques mesurées sur les pièces de l'échantillon prélevé à la période t+1 ;
- $S_t$ est l'écart-type pondéré de la dimension caractéristique calculé pour la période t;
- $\lambda$ est un coefficient de pondération compris entre 0 et 1.

**5.** Procédé selon l'une quelconque des revendications 1 à 3, dans lequel il est calculé pour chaque échantillon prélevé à une période t+1 une moyenne pondérée $M_{t+1}$ et un écart-type pondéré $S_{t+1}$ de la dimension caractéristique selon les formules :

$$M_{t+1} = \lambda^*\, \mu_{t+1} + (1-\lambda^*)M_t$$

$$S_{t+1} = \sqrt{\lambda^*\, \sigma_{t+1}^2 + (1-\lambda^*)S_t^2 + \lambda^*(1-\lambda^*)(\mu_{t+1} - M_t)^2}$$

où :

- $\mu_{t+1}$ est la moyenne des dimensions caractéristiques mesurées sur les pièces de l'échantillon prélevé à la période t+1 ;
- $M_t$ est la moyenne pondérée de la dimension caractéristique calculée pour la période t ;
- $\sigma_{t+1}$ est l'écart-type des dimensions caractéristiques mesurées sur les pièces de l'échantillon prélevé à la période t+1 ;
- $S_t$ est l'écart-type pondéré de la dimension caractéristique calculé pour la période t;
- $\lambda$ est un coefficient de pondération compris entre 0 et 1 ;
- $\lambda^*$ est un coefficient de pondération intermédiaire défini par la formule :

$$\lambda^* = \frac{k\,\lambda\, n_{t+1}}{k\,\lambda\, n_{t+1} + (1-\lambda)\, N_t}$$

**6.** Procédé selon l'une quelconque des revendications 1 à 5, dans lequel le au moins un indicateur statistique est un indice de capabilité et/ou un coefficient de centrage.

**7.** Procédé selon la revendication 6, dans lequel il est choisi comme indicateur statistique un indice de capabilité Cpk calculé selon la formule :

$$Cpk = \frac{Min(TS - M_{t+1}\,;M_{t+1} - TI)}{3S_{t+1}}$$

où :

- $M_{t+1}$ est la moyenne pondérée et $S_{t+1}$ l'écart-type pondéré de la dimension caractéristique d'un échantillon à une période t+1 ;
- TS est une tolérance supérieure de la dimension caractéristique mesurée ;
- TI est une tolérance inférieure de la dimension caractéristique mesurée.

8. Procédé selon la revendication 7, dans lequel il est choisi comme indicateur statistique un indice de capabilité Cp calculé selon la formule :

$$Cp = \frac{(TS - TI)/2}{3S_{t+1}}$$

où :

- $S_{t+1}$ est l'écart-type pondéré de la dimension caractéristique d'un échantillon à une période t+1 ;
- TS est une tolérance supérieure de la dimension caractéristique mesurée ;
- TI est une tolérance inférieure de la dimension caractéristique mesurée.

9. Procédé selon la revendication 7, dans lequel il est choisi comme indicateur statistique un coefficient de centrage Cc calculé selon la formule :

$$Cc = \frac{M_{t+1}}{(TS - TI)/2}$$

où :

- $M_{t+1}$ est la moyenne pondéré de la dimension caractéristique d'un échantillon à une période t+1 ;
- TS est une tolérance supérieure de la dimension caractéristique mesurée ;
- TI est une tolérance inférieure de la dimension caractéristique mesurée.

## Patentansprüche

1. Verfahren zur Herstellung von Teilen, die mit einer Produktionsvorrichtung hergestellt werden, basierend auf der Analyse mindestens eines statistischen Indikators, der für eine charakteristische Abmessung der Teile repräsentativ ist, umfassend die folgenden automatisierten Schritte, die bestehen im:

a) Entnehmen, im Laufe der Zeit, mehrerer Proben, wobei jede Probe mehrere mit der Produktionsvorrichtung hergestellte Teile umfasst,
b) Messen, mit einer Messvorrichtung, der charakteristischen Abmessung jedes Teils der entnommenen Probe,
c) Berechnen, mit einer Rechenvorrichtung, für jede entnommene Probe eines gewichteten Mittelwerts und einer gewichteten Standardabweichung der charakteristischen Abmessung gemäß einer exponentiellen Wichtung auf der Basis

o eines Mittelwerts und einer Standardabweichung der charakteristischen Abmessungen, gemessen auf den Teilen der entnommenen Probe,
o gewichteter Mittelwerte und gewichteter Standardabweichungen der charakteristischen Abmessung, berechnet für zuvor entnommene Proben,

d) Berechnen, mit der Rechenvorrichtung, für jede entnommene Probe eines Werts des statistischen Indikators auf der Basis des gewichteten Mittelwerts und der gewichteten Standardabweichung, die derart berechnet wurden,
e) Vergleichen, mit einer Steuervorrichtung, des derart für die entnommene Probe berechneten Werts des statistischen Indikators mit einem Referenzwert, um eine eventuelle Abweichung zwischen dem Wert des statistischen Indikators und dem Referenzwert zu ermitteln,
f) Steuern, mit der Steuervorrichtung, die Herstellung der Teile in Abhängigkeit der Ergebnisse des Vergleichs bei Anpassung der Einstellungsparameter der Herstellungsvorrichtung, um die Abweichung zwischen dem Wert des statistischen Indikators und dem Referenzwert zu optimieren.

2. Verfahren nach Anspruch 1, wobei die Anzahl der in jeder entnommenen Probe enthaltenen Teile nicht konstant ist, und wobei, um für jede zu einem Zeitraum t+1 entnommene Probe einen gewichteten Mittelwert und eine gewichtete Standardabweichung der charakteristischen Abmessung zu berechnen, eine Anzahl geclusterter Teile $N_{t+1}$ gemäß der Formel bestimmt wird:

$$N_{t+1} = \lambda\, n_{t+1} + (1-\lambda)\, N_t$$

wobei:

- $n_{t+1}$ die Anzahl der Teile ist, die in der im Zeitraum t+1 entnommenen Probe enthalten sind,
- $N_t$ die Anzahl der geclusterten Teile der Probe im Zeitraum t ist,
- $\lambda$ ein Wichtungskoeffizient zwischen 0 und 1 inklusive ist.

3. Verfahren nach Anspruch 1, wobei die Anzahl der in jeder entnommenen Probe enthaltenen Teile nicht konstant ist, und wobei, um für jede in einem Zeitraum t+1 entnommene Probe einen gewichteten Mittelwert und eine gewichtete Standardabweichung der charakteristischen Abmessung zu berechnen, eine Anzahl geclusterter Teile $N_{t+1}$ gemäß der Formel bestimmt wird:

$$N_{t+1} = k\, \lambda\, n_{t+1} + (1-\lambda)\, N_t$$

wobei:

- $n_{t+1}$ die Anzahl der Teile ist, die in der im Zeitraum t+1 entnommenen Probe enthalten sind,
- $N_t$ die Anzahl der geclusterten Teile der Probe im Zeitraum t ist,
- $\lambda$ ein Wichtungskoeffizient zwischen 0 und 1 inklusive ist,
- k ein bestimmter Clusterkoeffizient größer als 1 ist.

4. Verfahren nach einem der Ansprüche 1 bis 3, wobei für jede in einem Zeitraum t+1 entnommenen Probe ein gewichteter Mittelwert $M_{t+1}$ und eine gewichtete Standardabweichung $S_{t+1}$ der charakteristischen Abmessung gemäß den Formeln berechnet wird:

$$M_{t+1} = \lambda\, \mu_{t+1} + (1-\lambda)M_t$$

$$S_{t+1} = \sqrt{\lambda\, \sigma_{t+1}^2 + (1-\lambda)S_t^2 + \lambda\,(1-\lambda)(\mu_{t+1} - M_t)^2}$$

wobei:

- $\mu_{t+1}$ der Mittelwert der charakteristischen Abmessungen, gemessen bei den Teilen der im Zeitraum t+1 entnommenen Probe, ist,
- $M_t$ der gewichtete Mittelwert der charakteristischen Abmessung, berechnet für den Zeitraum t, ist,
- $\sigma_{t+1}$ die Standardabweichung der charakteristischen Abmessungen, gemessen bei den Teilen der im Zeitraum t+1 entnommenen Probe, ist,
- St die gewichtete Standardabweichung der charakteristischen Abmessung, berechnet für den Zeitraum t, ist,
- $\lambda$ ein Wichtungskoeffizient zwischen 0 und 1 inklusive ist.

5. Verfahren nach einem der Ansprüche 1 bis 3, wobei für jede in einem Zeitraum t+1 entnommenen Probe ein gewichteter Mittelwert $M_{t+1}$ und eine gewichtete Standardabweichung $S_{t+1}$ der charakteristischen Abmessung gemäß den Formeln berechnet wird:

$$M_{t+1} = \lambda^* \mu_{t+1} + (1 - \lambda^*) M_t$$

$$S_{t+1} = \sqrt{\lambda^* \sigma_{t+1}^2 + (1 - \lambda^*) S_t^2 + \lambda^* (1 - \lambda^*)(\mu_{t+1} - M_t)^2}$$

wobei:

- $\mu_{t+1}$ der Mittelwert der charakteristischen Abmessungen, gemessen bei den Teilen der im Zeitraum t+1 entnommenen Probe, ist,
- $M_t$ der gewichtete Mittelwert der charakteristischen Abmessung, berechnet für den Zeitraum t, ist,
- $\sigma_{t+1}$ die Standardabweichung der charakteristischen Abmessungen, gemessen bei den Teilen der im Zeitraum t+1 entnommenen Probe, ist,
- $S_t$ die gewichtete Standardabweichung der charakteristischen Abmessung, berechnet für den Zeitraum t, ist,
- $\lambda$ ein Wichtungskoeffizient zwischen 0 und 1 inklusive ist,
- $\lambda^*$ ein Übergangs-Wichtungskoeffizient ist, definiert durch die Formel:

$$\lambda^* = \frac{k \lambda n_{t+1}}{k \lambda n_{t+1} + (1 - \lambda) N_t}$$

**6.** Verfahren nach einem der Ansprüche 1 bis 5, wobei der mindestens eine statistische Indikator ein Fähigkeitsindex und/oder ein Zentrierkoeffizient ist.

**7.** Verfahren nach Anspruch 6, wobei als statistischer Indikator ein Fähigkeitsindex Cpk ausgewählt wird, der nach der Formel berechnet wird:

$$Cpk = \frac{Min(TS - M_{t+1}\,; M_{t+1} - TI)}{3S_{t+1}}$$

wobei:

- $M_{t+1}$ der gewichtete Mittelwert und $S_{t+1}$ die gewichtete Standardabweichung der charakteristischen Abmessung einer Probe zu einem Zeitraum t+1 ist,
- TS eine größere Toleranz der gemessenen charakteristischen Abmessung ist,
- TI eine kleinere Toleranz der gemessenen charakteristischen Abmessung ist.

**8.** Verfahren nach Anspruch 7, wobei als statistischer Indikator ein Fähigkeitsindex Cp ausgewählt wird, der nach der Formel berechnet wird:

$$Cp = \frac{(TS - TI)/2}{3S_{t+1}}$$

wobei:

- $S_{t+1}$ die gewichtete Standardabweichung der charakteristischen Abmessung einer Probe zu einem Zeitpunkt t+1 ist,
- TS eine größere Toleranz der gemessenen charakteristischen Abmessung ist,
- TI eine kleinere Toleranz der gemessenen charakteristischen Abmessung ist.

**9.** Verfahren nach Anspruch 7, wobei als statistischer Indikator ein Zentrierkoeffizient Cc ausgewählt wird, der nach der Formel berechnet wird:

$$Cc = \frac{M_{t+1}}{(TS - TI)/2}$$

wobei:

- $M_{t+1}$ der gewichtete Mittelwert der charakteristischen Abmessung einer Probe zu einem Zeitraum t+1 ist,
- TS eine größere Toleranz der gemessenen charakteristischen Abmessung ist,
- TI eine kleinere Toleranz der gemessenen charakteristischen Abmessung ist.

**Claims**

1. A method for manufacturing parts produced with a manufacturing device, based on an analysis of at least one statistical indicator representative of a characteristic dimension of parts, comprising the following automated steps consisting in:

   a) taking over time several samples, each sample comprising several parts produced with the manufacturing device;
   b) measuring, with a measuring device, the characteristic dimension of each part of the sample;
   c) calculating, with a calculation device, for each sample taken, a weighted average and a weighted standard deviation of the characteristic dimension according to an exponential weighting from

   ∘ an average and a standard deviation of the characteristic dimensions measured on the parts of said sample taken,
   ∘ weighted averages and weighted standard deviations of the characteristic dimension calculated for samples taken previously;

   d) calculating, with the calculation device, for each sample taken, a value of the statistical indicator from the weighted average and the weighted standard deviation calculated in this way;
   e) comparing, with a regulating device, the value of the statistical indicator calculated in this way for the sample taken to a reference value in order to detect any deviation between the value of the statistical indicator and the reference value;
   f) regulating, with the regulating device, the manufacturing of parts as a function of the results of comparison by adjusting regulating parameters of the manufacturing device to optimise the deviation between the value of the statistical indicator and the reference value.

2. The method as claimed in Claim 1, in which the number of parts contained in each sample taken is not constant, and where in order to calculate for each sample taken at a period t+1 a weighted average and a weighted standard deviation of the characteristic dimension, a number of aggregated parts $N_{t+1}$ is defined according to the formula:

$$N_{t+1} = \lambda\, n_{t+1} + (1 - \lambda)\, N_t$$

where:

- $n_{t+1}$ is the number of parts contained in the sample taken at the period t+1;
- $N_t$ is the number of aggregated parts of the sample at the period t;
- A is a weighting coefficient between 0 and 1.

3. The method as claimed in Claim 1, in which the number of parts contained in each sample taken is not constant, and where in order to calculate for each sample taken at a period t+1 a weighted average and a weighted standard deviation of the characteristic dimension, a number of aggregated parts $N_{t+1}$ is defined according to the formula:

$$N_{t+1} = k\, \lambda\, n_{t+1} + (1 - \lambda)\, N_t$$

where:

- $n_{t+1}$ is the number of parts contained in the sample taken at the period t+1;
- $N_t$ is the number of aggregated parts of the sample at the period t;
- A is a weighting coefficient between 0 and 1;
- k is an aggregation coefficient determined strictly greater than 1.

**4.** The method as claimed in any one of Claims 1 to 3, in which a weighted average $M_{t+1}$ and a weighted standard deviation $S_{t+1}$ of the characteristic dimension are calculated for each sample taken at a period t+1 according to the formulas:

$$M_{t+1} = \lambda \, \mu_{t+1} + (1 - \lambda)M_t$$

$$S_{t+1} = \sqrt{\lambda \, \sigma_{t+1}^2 + (1 - \lambda)S_t^2 + \lambda \, (1 - \lambda)(\mu_{t+1} - M_t)^2}$$

where:

- $\mu_{t+1}$ is the average of characteristic dimensions measured on the parts of the sample taken at the period t+1;
- $M_t$ is the weighted average of the characteristic dimension calculated for the period t;
- $\sigma_{t+1}$ is the standard deviation of characteristic dimensions measured on the parts of the sample taken at the period t+1;
- $S_t$ is the weighted standard deviation of the characteristic dimension calculated for the period t;
- A is a weighting coefficient between 0 and 1.

**5.** The method as claimed in any one of Claims 1 to 3, in which a weighted average $M_{t+1}$ and a weighted standard deviation $S_{t+1}$ of the characteristic dimension are calculated for each sample taken at a period t+1 according to the formulas:

$$M_{t+1} = \lambda^* \, \mu_{t+1} + (1 - \lambda^*)M_t$$

$$S_{t+1} = \sqrt{\lambda^* \, \sigma_{t+1}^2 + (1 - \lambda^*)S_t^2 + \lambda^*(1 - \lambda^*)(\mu_{t+1} - M_t)^2}$$

where:

- $\mu_{t+1}$ is the average of characteristic dimensions measured on the parts of the sample taken at the period t+1;
- $M_t$ is the weighted average of the characteristic dimension calculated for the period t;
- $\sigma_{t+1}$ is the standard deviation of characteristic dimensions measured on the parts of the sample taken at the period t+1;
- $S_t$ is the weighted standard deviation of the characteristic dimension calculated for the period t;
- $\lambda$ is a weighting coefficient between 0 and 1;
- $\lambda^*$ is an intermediate weighting coefficient defined by the formula:

$$\lambda^* = \frac{k \, \lambda \, n_{t+1}}{k \, \lambda \, n_{t+1} + (1 - \lambda) \, N_t}$$

**6.** The method as claimed in any one of Claims 1 to 5, in which the at least one statistical indicator is a capability index and/or a centring coefficient.

**7.** The method as claimed in Claim 6, in which a capability index Cpk calculated according to the following formula is selected as statistical indicator:

$$Cpk = \frac{Min(TS - M_{t+1}\,;\,M_{t+1} - TI)}{3S_{t+1}}$$

where:

- $M_{t+1}$ is the weighted average and $S_{t+1}$ the weighted standard deviation of the characteristic dimension of a sample at a period t+1;
- TS is an upper tolerance of the measured characteristic dimension;
- TI is a lower tolerance of the measured characteristic dimension.

8. The method as claimed in Claim 7, in which a capability index Cp calculated according to the following formula is selected as statistical indicator:

$$Cp = \frac{(TS - TI)/2}{3S_{t+1}}$$

where:

- $S_{t+1}$ is the weighted standard deviation of the characteristic dimension of a sample at a period t+1;
- TS is an upper tolerance of the measured characteristic dimension;
- TI is a lower tolerance of the measured characteristic dimension.

9. The method as claimed in Claim 7, in which a centring coefficient Cc calculated according to the following formula is selected as a statistical indicator:

$$Cc = \frac{M_{t+1}}{(TS - TI)/2}$$

where:

- $M_{t+1}$ is the weighted average of the characteristic dimension of a sample at a period t+1;
- TS is an upper tolerance of the measured characteristic dimension;
- TI is a lower tolerance of the measured characteristic dimension.

Fig. 1

# Fig. 2

Pièces brutes → **Dispositif d'usinage** → Pièces usinées

Consigne

**Correcteur**

Erreur

Consigne

**Dispositif de calcul** ← Mesures ← **Dispositif de mesure** ← Echantillonnage de pièces

Valeur indicateur statistique

- / +

**EP 3 227 646 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5655110 A